# EUROPEAN PATENT SPECIFICATION

(11) **EP 2 794 109 B1**
(45) Date of publication and mention of the grant of the patent: **03.02.2016**
(21) Application number: 12808514.9
(22) Date of filing: 30.11.2012
(51) Int. Cl.: B02C 15/00, B02C 15/04, F16F 7/02, F16F 7/04

(54) **VIBRATION DAMPENING BASE ASSEMBLY FOR A GRINDING MILL**
VIBRATIONSDÄMPFENDE BODENKONSTRUKTION FÜR EINE ZERKLEINERUNGSMÜHLE
ENSEMBLE DE BASE D'AMORTISSEMENT DES VIBRATIONS POUR UN BROYEUR

(30) Priority: 21.12.2011 US 201113333177
(43) Date of publication of application: 29.10.2014
(73) Proprietor: ARVOS Inc., Wellsville, New York 14895 (US)
(72) Inventor: NELSON, Walter, Andrew, Tinley Park, Illinois 60487 (US); HOAG, James, Raymond, Tinley Park, Illinois 60487 (US)
(74) Representative: Speich, Stéphane
(86) International application number: PCT/IB2012/056884
(87) International publication number: WO 2013/093679

(56) References cited:
- EP-A1- 2 359 935
- US-A- 4 155 511

## Description

### FIELD

The present invention is generally directed to a base assembly for a grinding mill, as defined in claim 1.

Such a conventional base assembly is disclosed in US-A-4155511. The grinding table of the mill rotates on bearing means which are mounted on a series of generally vertical columns. The support column are positioned beneath a bottom race of a roller bearing, whereas the grinding path rests on the grinding table forming the top race of the roller bearing to transmit grinding pressures and vibrations from the grinding table downward directly to the mill foundation.

### BACKGROUND

Grinding mills are used to crush and pulverize solid materials such as minerals, limestone, gypsum, phosphate rock, salt, coke and coal into small particles. Pendulum mills and roller mills are examples of typical grinding mills that can be used to crush and pulverize the solid materials. The grinding mills generally include a grinding section disposed inside a housing. The grinding mills can be mounted to a foundation. The grinding section can include a plurality of crushing members such as rollers, balls or pendulums that moveably engage a grinding surface. The crushing members are in operable communication with a driver, such as a motor, which imparts a rotary motion on the crushing members. During operation of the grinding mill, centrifugal forces drive the crushing members against the grinding surface. The crushing members pulverize the solid material against the grinding surface as a result of contact with the grinding surface.

### SUMMARY

According to aspects disclosed herein, there is provided a base assembly for a grinding mill. The base assembly includes a first ring having a first mating surface. The base assembly also includes a support frame having a second mating surface. The support frame is movably coupled to the first ring. The first mating surface and the second mating surface are in sliding engagement with one another. The base assembly further includes a second ring removably coupled to the first ring. The second ring receives impact forces from grinding members which engage the second ring. The base assembly can dampen vibrations resulting from the impact forces.

In another aspect defined herein, the first ring is manufactured from a casting process and can dampen vibrations resulting from the impact forces.

In yet another aspect disclosed herein, the first mating surface and the second mating surface can generate vibration dampening forces.

In one embodiment, a dampening pad is disposed between and engages the first ring and the support frame.

In another embodiment, the base assembly includes a vibration dampening device that can vary the amount of damping by adjusting settings of the vibration dampening device.

### BRIEF DESCRIPTION OF FIGURES

With reference now to the figures where all like parts are numbered alike;
FIG. 1 is a perspective view with a section removed to illustrate a cross sectional view of a base assembly for a roller mill, as disclosed herein;
FIG. 2 is an exploded view of the base assembly of FIG. 1 disclosed herein;
FIG. 3 is an enlarged view of the cross section of the base assembly of FIG. 1;
FIG. 4 is an enlarged cross sectional view of a base assembly having a dampening pad incorporated therein; and
FIG. 5 is a cross sectional view of a grinding assembly installed in the base assembly of FIG. 1.

### DETAILED DESCRIPTION

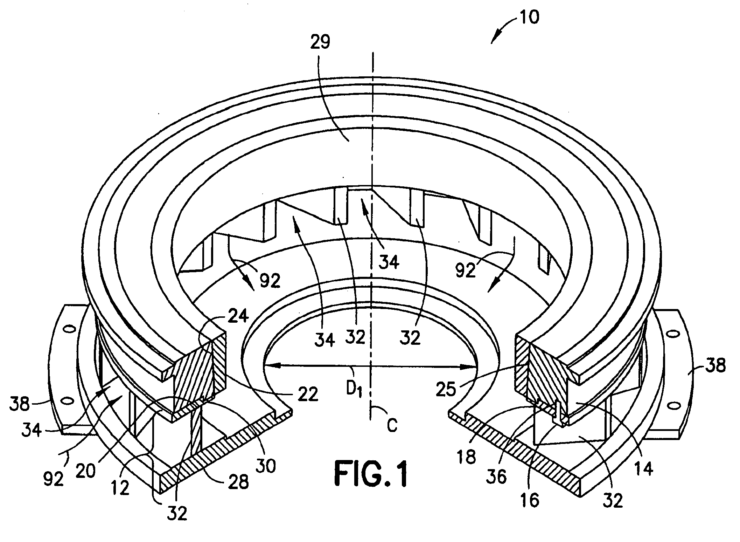

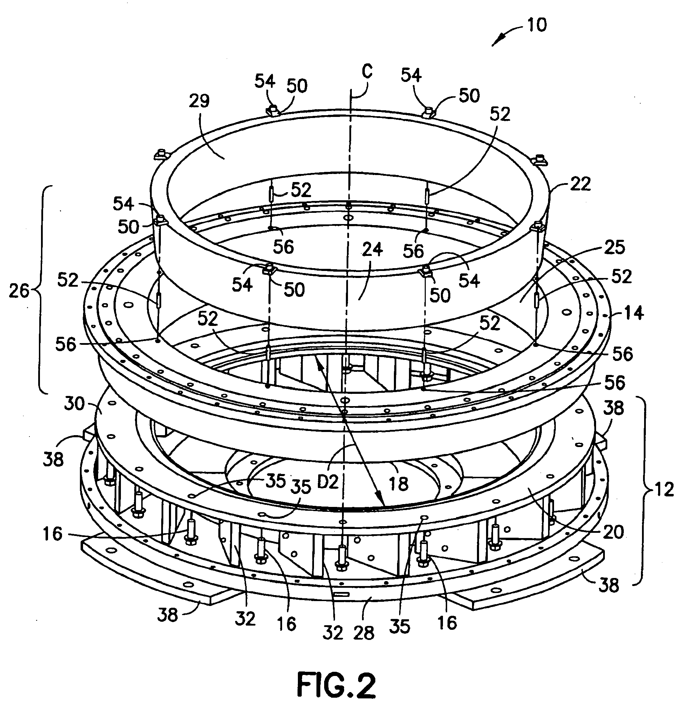

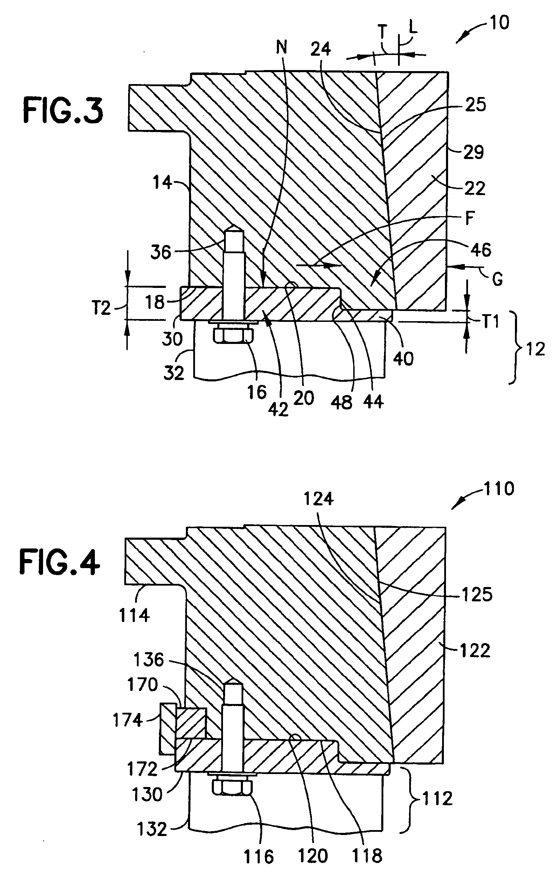

As illustrated in FIGS. 1-3, a generally annular base assembly for a rolling mill is designated by the numeral 10. The base assembly 10 includes a support frame 12 and a first ring 14 movably coupled to one another by suitable fasteners 16, such as but not limited to bolts threaded into respective bores. The first ring 14 defines an axially facing first mating surface 18. In the illustrated embodiment, the axially facing first mating surface 18 is downwardly facing. The support frame 12 defines an axial facing second mating surface 20, complimentary in shape to the first mating surface 18. The first mating surface 18 slidingly engages the second mating surface 20. A second ring 22 having a radially outward facing surface 24 is removably coupled to a radially inward facing surface 25 of the first ring 14 by suitable fastener assemblies 26 (see FIG. 2). The radially outward facing surface 24 and the radially inward facing surface 25 have a taper angle T relative to a longitudinal line L to provide a taper fit between the first ring 14 and the second ring 22, as best shown in FIG. 3. The second ring 22 receives impact forces from grinding members which engage the second ring, as described below. The support frame 12, the first ring 14 and the second ring 22 cooperate with one another to dampen vibrations resulting from the impact forces.

In one embodiment, the first ring 14 is manufactured from a cast metal which has a mass and density suitable for dampening vibrations imparted on the base assembly 10 by the impact forces. For example, the first ring 14 can be a vibration dampening ring manufactured from cast iron. In one embodiment, the second ring has a radially inwardly facing surface that has a hardness of about 50 Rockwell C scale or more.

As illustrated in FIGS. 1-3 the support frame 12 includes a substantially annular first plate 28 having a first opening extending therethrough. The first opening has a first diameter D1. The support frame 12 includes a substantially annular second plate 30 having a second opening extending therethrough. The second opening has a second diameter D2, that is less than the first diameter D1. A plurality of vanes 32 extend between and join the first plate 28 and the second plate 30. The vanes 32 are circumferentially and radially slanted. Adjacent pairs of vanes 32 define a conduit 34 therebetween for conveying a fluid stream such as air therethrough. The first plate 28, the second plate 30 and the vanes 32 are positioned concentrically about a central axis C of the base assembly 10. The second plate 30 includes a plurality of bores 35 extending therethrough and through which the fasteners 16 extend. The first ring 14 includes a plurality of threaded bores 36 which receive the fasteners 16. In the embodiment illustrated in FIG. 2, four mounting plates 38 are secured to an axial face of the first plate 28, for securing the base assembly 10 to a foundation structure (not shown). While four mounting plates 38 are shown and described, any number of mounting plates can be employed including but not limited to a single mounting plate, two or three mounting plates or more than four mounting plates.

As illustrated best in FIG. 3, the second plate 30 includes a first section 40 having a first axial thickness T1. The first section 40 is located radially outward of a second section 42 having a second axial thickness T2. The second axial thickness T2 is greater than the first axial thickness T1. A shoulder 44 is defined at a junction of the first section 40 and the second section 42. The first ring 14 includes a lobe 46 extending axially away from the first ring at a peripheral portion thereof. The lobe 46 includes a radially inward facing abutment surface 48.

In one embodiment, the vanes 32 are welded to the second plate 30 and the first plate 28. The mounting plates 38 can also be welded to the first plate 28. While the vanes 32 are described as being welded to the second plate 30 and the first plate 28 and the mounting plates 38 are welded to the first plate 28, the present disclosure is not limited in this regard as the suitable fasteners may be employed to secure the vanes to the first plate and the second plate and to secure the mounting plates to the first plate. In one embodiment, the support frame 12 can be formed as an integral structure.

In one embodiment, each of the fastener assemblies 26 includes a clamp 50 extending radially outward from an edge of the second ring 14. One end of a threaded rod 52 extends through a bore in the clamp 50 and has a nut 54 screwed thereon. An opposing end of the threaded rod 52 is screwed into a threaded bore 56 in the first ring 14.

The base assembly illustrated in FIG. 4, is similar to the base assembly 10 illustrated in FIGS. 1-3. Accordingly, similar elements are marked with similar element numbers preceded by the numeral 1. Unlike the base assembly 10, the base assembly 110 includes a vibration dampening pad 170 disposed between the first mating surface 118 and the second mating surface 120. In the illustrated embodiment, the vibration dampening pad 170 is disposed in a pocket 172 defined by the first mating surface 118 and the second mating surface 120. A retaining ring 174 defines an exterior surface which engages an inwardly facing portion of the vibration dampening pad 170 and an inside edge of the second plate 130. The retaining ring 174 secures the vibration dampening pad 170 in the pocket 172. The vibration dampening pad 170 is manufactured from a high temperature elastomeric material or composite material such as but not limited to those materials supplied by AirLoc ® (A Division of Clark-Cutler McDermott Company 5 Fisher Street, P.O. Box 269, Franklin, MA 02038 USA) and silicone rubber VIB-X pads manufactured by Silent Source of 58 Nonotuck Street Northampton, MA 01062.

While the dampening pad 170 is shown and described as being positioned in the pocket 172, the present disclosure is not limited in this regard as one or more dampening pads of different shapes and configurations (e.g., sheets or strips) may be positioned at other locations between the first mating surface 118 and the second mating surface 120, adjacent thereto and/or between the first ring 114 and the second ring 122.

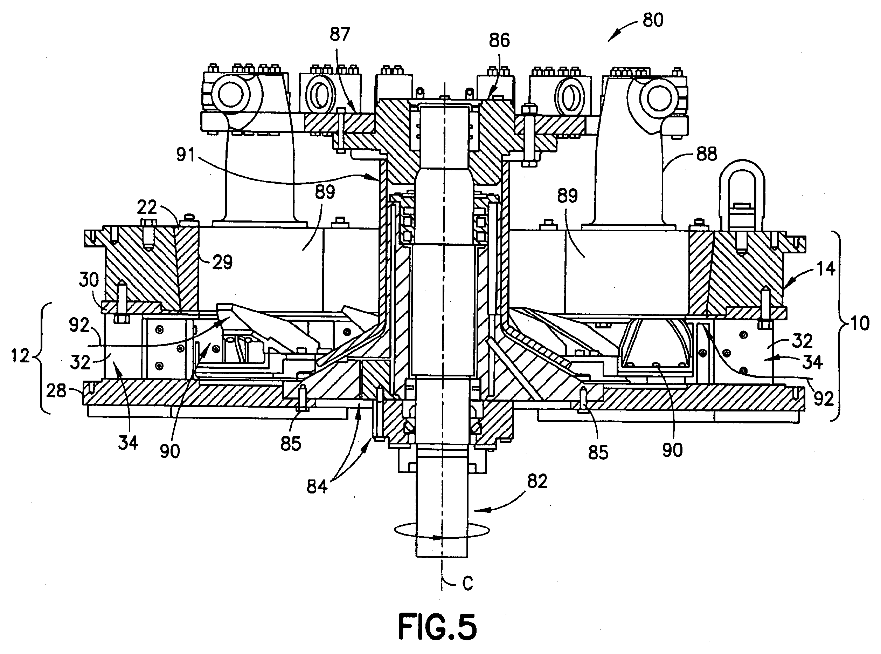

As illustrated in FIG. 5, the base assembly 10 has a grinding mill assembly 80 positioned therein. The grinding mill assembly 80 includes a support shaft 82 rotationally supported by a bearing housing 84. The bearing housing 84 is secured to the first plate 28 with suitable fasteners 85. One end of the shaft 82 is coupled to a drive unit (not shown) for rotating the shaft. An opposing end of the shaft 82 has as hub 86 mounted thereto. A plurality of arms 87 extend from the hub 86. Each of the arms 87 pivotally support a roller journal 88 which has a roller 89 rotatingly coupled to an end thereof. The roller 89 rollingly engages a hardened inward facing surface 29 of the second ring 22. A plow assembly 90 is coupled to the hub 86 by a plow support 91. While the base assembly 10 is described as having the grinding mill assembly 80 having the roller journals 88 and the rollers 89, the present disclosure is not limited in this regard as the base assembly 10 can be used with other grinding mills including but not limited to those having arcuate second rings and balls rolling therein.

During operation of the grinding mill, the shaft 82 rotates the hub 86 and arms 87 so that the roller journals 88 swing outwardly in a pendulum manner. Thus the rollers 89 are driven outwardly against the hardened surface 29 by centrifugal force. Material to be crushed or pulverized by the grinding mill is introduced into an interior area of the grinding mill via a chute (not shown) and fed to the plow assembly 90. Air is supplied to the grinding mill through the conduits 32, as indicated by the arrows marked 92. The material is crushed between the rollers 88 and the hardened surface 29 of the second ring 22. As a result of rotation of the rollers 89 and rolling engagement of the rollers with the hardened surface 29, impact forces C are transmitted to the base assembly 10. The impact forces C cause vibration of the base assembly 10 and the grinding mill. The impact forces C are generated by centrifugal forces caused by rotation of the roller journals 88 and the rollers 89 which act on the hardened surface 29 of the second ring 22.

As illustrated in FIG. 3, the fasteners 16 clamp the first mating surface 18 and the second mating surface 20 thereby generating a force N acting on and perpendicular to the first mating surface and the second mating surface. Oscillatory radial movement of the first ring 14 relative to the support frame 12 is dampened and/or resisted by a friction force F acting generally parallel to the first mating surface 18 and the second mating surface 20. The friction force F is defined by the product of the normal force N and a coefficient of friction of the first mating surface 18 and the second mating surface 20. The normal force N and therefore the friction force F increases with increasing torque applied to the fasteners 16. The normal force N and therefore the friction force F decreases with decreasing torque applied to the fasteners 16. The fasteners 16 therefore provide adjustable and variable vibration dampening control for the base assembly 10. In one embodiment, a maximum amount of vibration dampening occurs when the friction force F is about 50% of the impact forces C.

In addition, engagement of the shoulder 44 with the abutment surface 48 limits axial movement of the first ring 14 relative to the support frame 12 and maintains the first ring and the second ring 22 concentric with the central axis C.

While the present disclosure has been described with reference to various exemplary embodiments, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

## Claims

1. A base assembly (10) for a grinding mill comprising:
a first ring (14) having a first mating surface (18);
a support frame (12) having a second mating surface (20), the support frame (12) being movably coupled to the first ring (14), the first mating surface (18) and the second mating surface (20) being in sliding engagement with one another;
a second ring (22) removably coupled to the first ring (14), the second ring (22) being operable to receive impact forces from grinding members which engage the second ring (22);
the base assembly (10) being operable to dampen vibrations resulting from the impact forces applied to the base assembly.

2. The base assembly of claim 1, wherein the first ring (14) is manufactured from a casting process.

3. The base assembly of claim 1, wherein the first ring (14) is manufactured from cast iron.

4. The base assembly of claim 1, wherein the second ring (22) is manufactured from a wrought material.

5. The base assembly of claim 1, wherein the support frame (12) comprises a plurality of metal plates welded to one another.

6. The base assembly of claim 1, wherein the second ring (22) has a radially inwardly facing surface (20) that has a hardness of at least about 50 Rockwell C scale.

7. The base assembly of claim 1, wherein the first mating surface (18) and the second mating surface (20) are operable to generate vibration dampening forces.

8. The base assembly of claim 1, comprising a dampening pad disposed between and engaging the first ring (14) and the support frame (12).

9. The base assembly of claim 8, wherein the dampening pad is manufactured from at least one of silicone, an elastomeric material or a composite material.

10. The base assembly of claim 1, wherein the first ring (14) and the support frame (12) are coupled to one another by at least one fastener (16).

11. The base assembly of claim 1, wherein the second ring (22) is coupled to the first ring (14) by at least one fastener assembly (16) and a tapered fit between the first ring (14) and the second ring (22).

12. The base assembly of claim 1, comprising a variable vibration dampening control device.

13. The base assembly of claim 12, wherein the variable dampening control device comprises at least one fastener, being operable to be adjusted to change a magnitude of a dampening force acting on at least one of the first mating surface and the second mating surface.

## Patentansprüche

1. Basisbaugruppe (10) für eine Schleifmühle, die umfasst:
einen ersten Ring (14) mit einer ersten Gegenfläche (18);
einen Trägerrahmen (12) mit einer zweiten Gegenfläche (20), wobei der Trägerrahmen (12) beweglich mit dem ersten Ring (14) verbunden ist, wobei die erste Gegenfläche (18) und die zweite Gegenfläche (20) gleitend aneinander greifen;
einen zweiten Ring (22), der lösbar mit dem ersten Ring (14) verbunden ist, wobei der zweite Ring (22) so betreibbar ist, dass er Aufprallkräfte von Schleifelementen aufnimmt, die mit dem zweiten Ring (22) im Eingriff stehen;
wobei die Basisbaugruppe (10) so betreibbar ist, dass sie Schwingungen dämpft, die aus den an die Basisbaugruppe angelegten Aufprallkräften entstehen.

2. Basisbaugruppe nach Anspruch 1, wobei der erste Ring (14) mit einem Gießprozess hergestellt wurde.

3. Basisbaugruppe nach Anspruch 1, wobei der erste Ring (14) aus Gusseisen hergestellt ist.

4. Basisbaugruppe nach Anspruch 1, wobei der zweite Ring (22) aus Halbzeug hergestellt ist.

5. Basisbaugruppe nach Anspruch 1, wobei der Trägerrahmen (12) eine Vielzahl von Metallplatten umfasst, die miteinander verschweißt sind.

6. Basisbaugruppe nach Anspruch 1, wobei der zweite Ring (22) eine radial nach innen gewandte Oberfläche (20) aufweist, die auf der Rockwell-C-Skala eine Härte von zumindest ungefähr 50 hat.

7. Basisbaugruppe nach Anspruch 1, wobei die erste Gegenfläche (18) und die zweite Gegenfläche (20) so betreibbar sind, dass sie Schwingungsdämpfungskräfte erzeugen.

8. Basisbaugruppe nach Anspruch 1, die ein Dämpfkissen umfasst, das zwischen dem ersten Ring (14) und dem Trägerrahmen (12) angeordnet ist und mit diesen im Eingriff steht.

9. Basisbaugruppe nach Anspruch 8, wobei das Dämpfungskissen aus zumindest einem aus Silikon, einem elastomeren Material oder einem Verbundmaterial hergestellt ist.

10. Basisbaugruppe nach Anspruch 1, wobei der erste Ring (14) und der Trägerrahmen (12) über zumindest ein Befestigungselement (16) miteinander verbunden sind.

11. Basisbaugruppe nach Anspruch 1, wobei der zweite Ring (22) mit dem ersten Ring (14) über zumindest eine Befestigungselementbaugruppe (16) und eine konische Passung zwischen dem ersten Ring (14) und dem zweiten Ring (22) verbunden ist.

12. Basisbaugruppe nach Anspruch 1, die eine variable Schwingungsdämpfungssteuerungsvorrichtung umfasst.

13. Basisbaugruppe nach Anspruch 12, wobei die variable Schwingungsdämpfungssteuerungsvorrichtung zumindest ein Befestigungselement umfasst, das so betreibbar ist, dass es an eine Änderung der Größenordnung einer Dämpfkraft angepasst wird, die auf zumindest eine der ersten Gegenfläche und der zweiten Gegenfläche wirkt.

## Revendications

1. Ensemble de base (10) pour un broyeur comprenant :
une première bague (14) comportant une première surface d'accouplement (18) ;
un cadre de support (12) comportant une deuxième surface d'accouplement (20), le cadre de support (12) étant accouplé de manière mobile à la première bague (14), la première surface d'accouplement (18) et la deuxième surface d'accouplement (20) étant en prise de manière coulissante l'une avec l'autre ;
une deuxième bague (22) accouplée de manière amovible à la première bague (14), la deuxième bague (22) pouvant être utilisée pour recevoir les forces d'impact des éléments de broyage qui viennent en prise avec la deuxième bague (22) ;
l'ensemble de base (10) pouvant être utilisé pour amortir les vibrations résultant des forces d'impact appliquées à l'ensemble de base.

2. Ensemble de base selon la revendication 1, dans lequel la première bague (14) est fabriquée par un processus de coulée.

3. Ensemble de base selon la revendication 1, dans lequel la première bague (14) est fabriquée en fonte.

4. Ensemble de base selon la revendication 1, dans lequel la deuxième bague (22) est fabriquée en un matériau forgé.

5. Ensemble de base selon la revendication 1, dans lequel le cadre de support (12) comprend une pluralité de plaques métalliques soudées les unes aux autres.

6. Ensemble de base selon la revendication 1, dans lequel la deuxième bague (22) comporte une surface orientée radialement vers l'intérieur (20) qui a une dureté d'au moins environ 50 sur une échelle C de dureté Rockwell.

7. Ensemble de base selon la revendication 1, dans lequel la première surface d'accouplement (18) et la deuxième surface d'accouplement (20) peuvent être utilisées pour générer des forces d'amortissement des vibrations.

8. Ensemble de base selon la revendication 1, comprenant un patin d'amortissement disposé entre et en prise avec la première bague (14) et le cadre de support (12).

9. Ensemble de base selon la revendication 8, dans lequel le patin d'amortissement est fabriqué à partir d'au moins l'un de la silicone, d'un matériau élastomérique ou d'un matériau composite.

10. Ensemble de base selon la revendication 1, dans lequel la première bague (14) et le cadre de support (12) sont accouplés l'un à l'autre par au moins un dispositif de fixation (16).

11. Ensemble de base selon la revendication 1, dans lequel la deuxième bague (22) est accouplée à la première bague (14) par au moins un ensemble de fixation (16) et par un ajustement conique entre la première bague (14) et la deuxième bague (22).

12. Ensemble de base selon la revendication 1, comprenant un dispositif de commande d'amortissement des vibrations variable.

13. Ensemble de base selon la revendication 12, dans lequel le dispositif de commande d'amortissement variable comprend au moins un dispositif de fixation, pouvant être utilisé pour être ajusté pour modifier une amplitude d'une force d'amortissement agissant sur au moins l'une de la première surface d'accouplement et de la deuxième surface d'accouplement.
